Europäisches Patentamt

European Patent Office

Office européen des brevets

(11) Numéro de publication: **0 070 944**
**A1**

## (12) DEMANDE DE BREVET EUROPEEN

(21) Numéro de dépôt: **81401353.8**

(22) Date de dépôt: **27.08.81**

(51) Int. Cl.³: **B 60 P 3/00**
**B 60 G 5/00, B 60 P 1/64**

(30) Priorité: **31.07.81 FR 8114941**

(43) Date de publication de la demande:
**09.02.83 Bulletin 83/6**

(84) Etats contractants désignés:
**AT BE CH DE FR GB IT LI LU NL SE**

(71) Demandeur: **BEAUGIER FRERES**
**Trelissac**
**F-24006 Perigueux(FR)**

(72) Inventeur: **Coget, Jacky**
**Mealeayolle**
**F-24006 Trelissac(FR)**

(74) Mandataire: **Rinuy, Guy et al,**
**14, Avenue de la Grande Armée**
**F-75017 Paris(FR)**

(54) Semi-remorque pour le transport de chevalets porte-verre ou similaires, à chargement et déchargement autonomes et son procédé de mise en oeuvre.

(57) Elle comprend un châssis (1) susceptible d'occuper une position de transport (5H) et une position de chargement (5B) , grâce à une suspension pneumatique réglable (3A, 3B, 3C). En position basse le châssis passe en-dessous du chevalet (13) placé au sol sur ses pieds (14A, 14B). L'avant du chevalet (13) est muni des galets (15) qui viennent porter sur le plateau du châssis (1). On retire les pieds avant (14A) et on continue à reculer jusqu'à ce que le chevalet (13) soit en place sur le plateau. On regonfle la suspension pour revenir en position de transport (5H) et on retire les pieds arrière (14B). Pour le déchargement, on procède en sens inverse.

La semi-remorque peut être utilisée dans tous les cas de transport de chevalets porte-verre ou similaires que l'on peut charger ou décharger sans aucun instrument de levage.

FIG.4

"Semi-remorque pour le transport de chevalets porte-verre ou similaires, à chargement et déchargement autonomes et son procédé de mise en oeuvre".

La présente invention concerne une semi-remorque plus spécialement destinée au transport de chevalets porte-verre ou similaires, dont les opérations de chargement et de déchargement sont totalement autonomes et ne nécessitent aucun instrument de levage.

La semi-remorque conforme à l'invention se caractérise en ce qu'elle comporte, en combinaison :

- un châssis supporté, à sa partie avant, par un véhicule tracteur d'un type quelconque connu et, à sa partie arrière, par une suspension pneumatique latérale disposée à la partie supérieure du train de roues arrière ;

- ladite suspension pneumatique permettant le débattement vertical du plateau, entre une position haute de transport et une position basse de chargement, ou de déchargement, pour laquelle la partie arrière dudit plateau peut s'engager en dessous du chevalet posé au sol sur quatre pieds d'extrémités escamotables ; et muni à son extrémité avant de patins à galets de roulement ;

- ledit plateau étant pourvu, d'une part, à son extrémité arrière, d'une ouverture à entrée biaise latéralement et d'une profondeur s'étendant jusqu'en avant de l'axe géométrique du train de roues arrière, d'autre part, de pistes de roulement longitudinales destinées à recevoir les patins à galets de roulement du chevalet, en avant du train de roues arrière de la semi-remorque et à leur servir de support, au fur et à mesure du recul de la semi-remorque, à position basse du plateau sous le chevalet jusqu'à ce que l'extrémité avant de ce dernier atteigne l'avant du plateau de la semi-remorque.

L'invention concerne également la mise en oeuvre d'une semi-remorque telle que définie ci-dessus et qui consiste:

- pour le chargement, à disposer la semi-remorque dans le prolongement du chevalet posé au sol sur ses pieds escamotables et muni des patins de roulement à son extrémité avant ; à dégonfler la suspension pneumatique ; à reculer la semi-remorque jusqu'à ce que les patins de roulement du chevalet viennent au contact des pistes de roulement du plateau et que les pieds avant du chevalet décollent du sol ; à dégager lesdits pieds avant ; à reculer la semi-remorque jusqu'à ce que les patins de roulement viennent au-dessus des plaques escamotables du plateau ; à regonfler la suspension pneumatique en position route ; à dégager les pieds arrière du chevalet puis à escamoter les plaques supportant les patins de roulement du chevalet ;

– et pour le déchargement, à procéder aux opérations inverses de celles du chargement.

D'autres caractéristiques, avantages et particularités de l'invention, ressortiront de la description qui en est donnée ci-après en regard des dessins annexés représentant, schématiquement et simplement à titre d'exemple, une forme de réalisation possible de ladite invention.

Sur ces dessins :

la figure 1 est une vue en élévation, avec un arrachement partiel, d'une semi-remorque pour le transport de chevalets porte-verre ou similaires, à chargement et déchargement autonomes, conforme à la présente invention ;

la figure 2 est une demi-vue de dessus en plan de la semi-remorque de la figure 1 ;

la figure 3 est une vue de détail à plus grande échelle permettant d'expliciter le fonctionnement et la cinématique de la suspension de la semi-remorque ;

les figures 4, 5, 6 sont des schémas explicatifs très simplifiés permettant de décrire les différentes phases successives de chargement d'un chevalet sur une semi-remorque conforme à l'invention ;

la figure 7 est une vue de détail à plus grande échelle représentant en élévation la partie arrière de la semi-remorque au moment où la partie avant du chevalet vient au contact des pistes de roulement de la semi-remorque, comme cela est schématisé sur la figure 5 ;

et la figure 8 est une vue de détail à plus grande échelle représentant en élévation le chevalet en place sur la semi-remorque, tel que schématisé sur la figure 6.

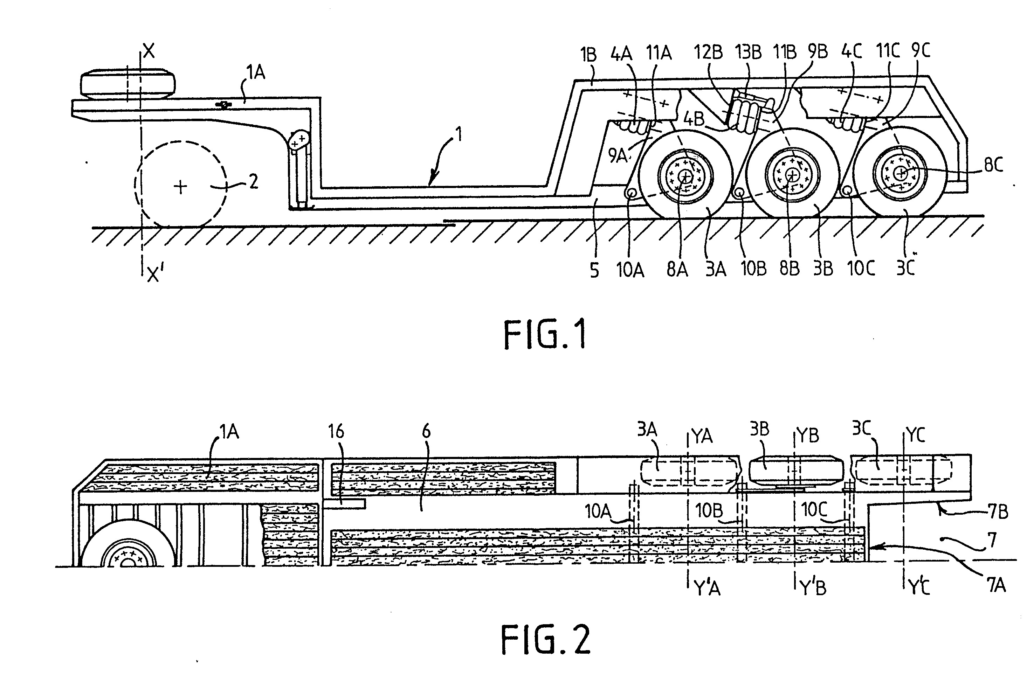

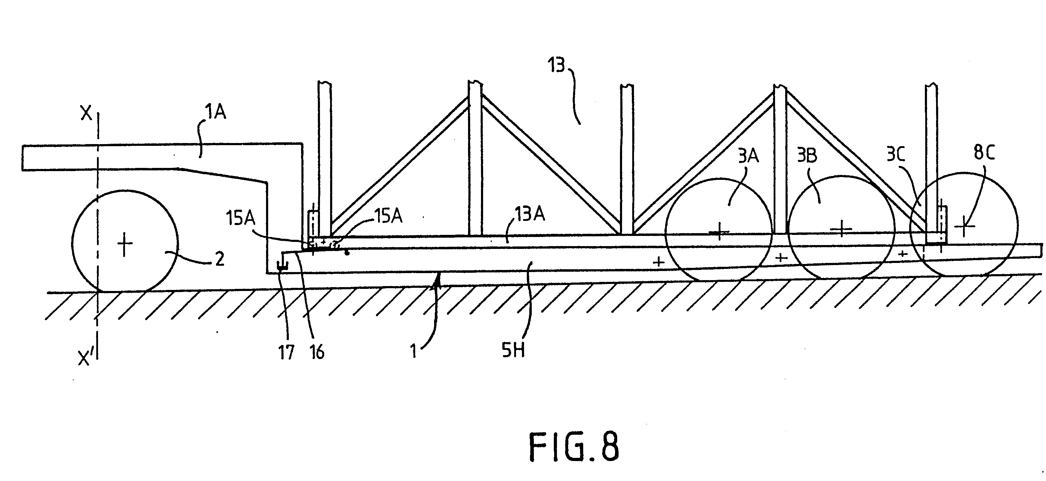

Suivant la forme de réalisation préférentielle représentée à titre d'exemple sur les dessins , la semi-remorque comporte un châssis désigné par la référence générale 1 supporté, à sa partie avant 1A, à la manière habituelle par
un véhicule tracteur classique dont, seuls, l'axe d'articulation XX' et le train de roues arrière 2 sont représentés sur
les figures 1 et 8.

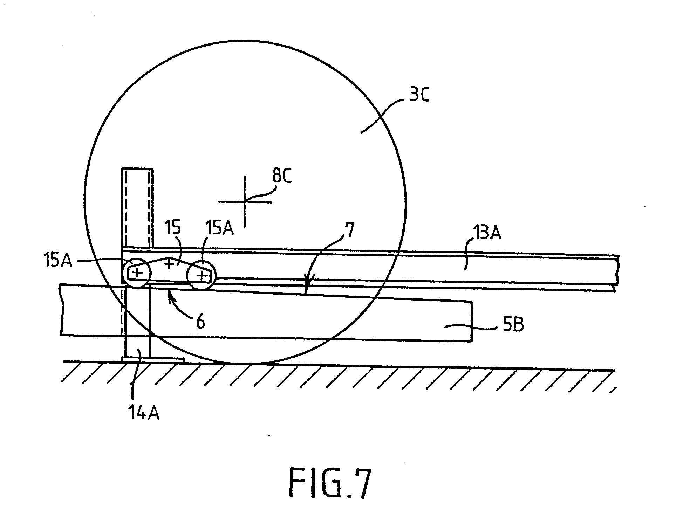

Suivant une caractéristique essentielle de l'invention, la partie arrière 1B, du châssis 1 est supportée par
trois trains de roues 3A, 3B, et 3C dont la suspension pneumatique 4A, 4B, 4C, sur laquelle on reviendra en détail plus
loin, est placée à la partie supérieure des roues afin de
permettre le débattement vertical du plateau 5 entre une
position haute du châssis, telle que représentée sur la figure 1 pour le transport, et une position basse pour le chargement ou le déchargement telle que représentée sur la figure 7.
Il est à noter dès maintenant que la suspension pneumatique
4A, 4B, 4C est placée à la partie supérieure des roues 3A, 3B,
3C et latéralement au plateau 5 de façon que, d'une part,
rien ne dépasse sous le chassis ni, d'autre part, n'empiète
au-dessus du plateau 5, au moment du chargement du chevalet
et sur route.

On voit sur la figure 2 que le plateau 5 comporte
deux pistes latérales de roulement, telle que 6, pour permettre
la mise en place du chevalet comme on le verra en détail plus
loin.

L'arrière du plateau 5 comporte, par ailleurs, une
ouverture 7 dont l'arête antérieure 7A se trouve placée en
avant de l'axe YC-Y'C du train de roues arrière 3C et dont les
arêtes latérales 7B sont biaises, ceci afin d'assurer, comme
on le verra en détail plus loin, le guidage du chevalet et de
permettre l'attaque des patins de roulement dont est munie
l'extrémité avant du chevalet, ceci afin de répartir du poids
sur l'ensemble et éviter le patinage éventuel des roues 2 du
tracteur.

Les roues 3A, 3B, et 3C sont montées sur des moignons
d'essieux 8A, 8B, 8C fixés sur des tôles épaisses de forme
générale triangulaire 9A, 9B, 9C qui s'articulent sur des
corps d'essieux 10A, 10B, 10C passant au travers du plateau 5
du châssis 1.

Ces tôles triangulaires 9A, 9B, 9C constituent les balanciers du système de suspension. A cet effet, les angles supérieurs de ces tôles comportent des surfaces d'appui transversales 11A, 11B, 11C sur lesquelles viennent porter la partie arrière des soufflets pneumatiques 4A, 4B, 4C dont les parties avant portent sur des surfaces d'appui, telles que 12B, solidaires de la partie arrière surélevée 1B du châssis 1. Par ailleurs, des amortisseurs, tels que 13B relient les surfaces d'appui fixes du châssis aux surfaces d'appui mobiles des balanciers 9A, 9B, 9C.

Une valve manuelle de réglage de la suspension (non représentée) permet au conducteur du tracteur d'assurer la descente de la partie arrière du plateau à une hauteur suffisamment basse pour que le plateau puisse s'engager sur le chevalet porte-verre placé au sol sur ses quatre pieds escamotables disposés à ses quatre extrémités, au moment du chargement comme on le décrira en détail plus loin.

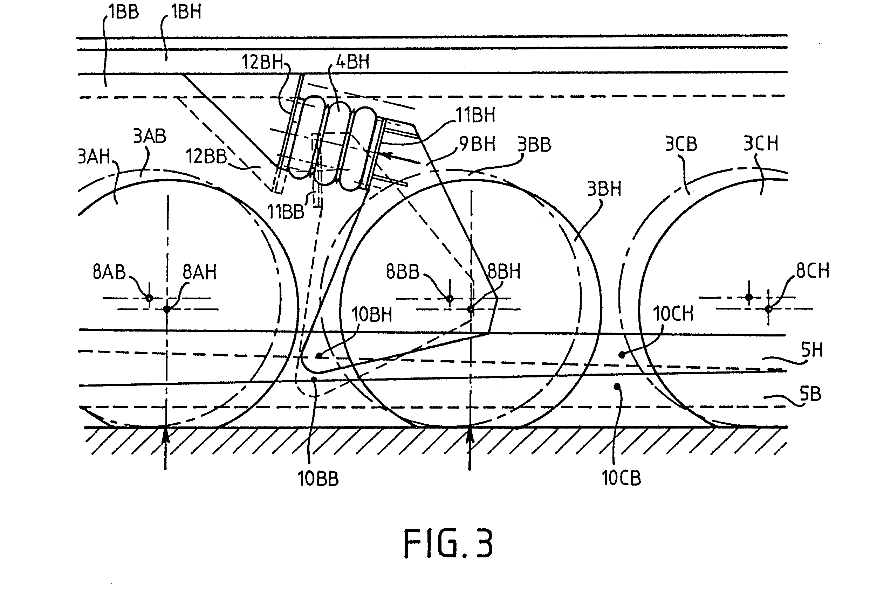

On va au préalable décrire en se référant à la figure 3 le fonctionnement du système de suspension ainsi que sa cinématique.

Il est à noter que dans le but d'éviter toute ambiguïté d'interprétation, on a représenté en trait plein les éléments constitutifs lorsque ces derniers occupent leur position haute et en trait interrompu ces mêmes éléments lorsqu'ils occupent leur position basse.

Par ailleurs, et dans le même but d'éviter toute ambiguïté, les références désignant ces éléments comportent l'indice H pour les positions hautes et l'indice B pour les positions basses.

Sans entrer dans des détails inutiles, on voit immédiatement à la lecture de la figure 3 que, lorsque les soufflets de la suspension, notamment le soufflet 4BH, sont gonflés, le balancier correspondant occupe la position 9BH, la partie arrière du châssis, la position 1BH et le plateau, la position 5H, toutes ces positions étant celles que l'on retrouve en cours de transport à vide de la figure 1 ou en charge de la figure 8.

Pour faire passer le plateau de la position haute 5H à la position basse 5B, le conducteur actionne la valve manuelle de réglage qui a pour effet de déglonfler les soufflets 4A, 4B, 4C.

Si l'on se réfère plus particulièrement à la figure 3 on voit que la surface d'appui du balancier 9BH ne trouvant plus de résistance va passer de la position 11BH à la position 11BB. La partie arrière du plateau, sous l'effet de la gravité, va pivoter autour de son point d'appui antérieur sur le véhicule tracteur pour venir dans la position inclinée 5B, ceci en entraînant le corps d'essieu de la position 10BH à la position 10BB. Le balancier 9B en pivotant autour du corps d'essieu 10B va faire passer l'axe du moyeu de la roue correspondante de la position 8BH à la position 8BB. La roue passe de son côté de la position 3BH à la position 3BB.

Il en est évidemment de même pour la roue 3AH qui vient en position 3BB et la roue 3CH qui vient en position 3BB, étant simplement à remarquer que l'angle de pivotement du balancier 9A de la roue 3A va être inférieur à celui du balancier 9B de la roue centrale 3B tandis que l'angle de pivotement du balancier 9C de la roue 3C va être supérieur à celui dudit balancier 9B de la roue centrale, en raison de l'inclinaison vers le bas de l'extrémité arrière du plateau 5.

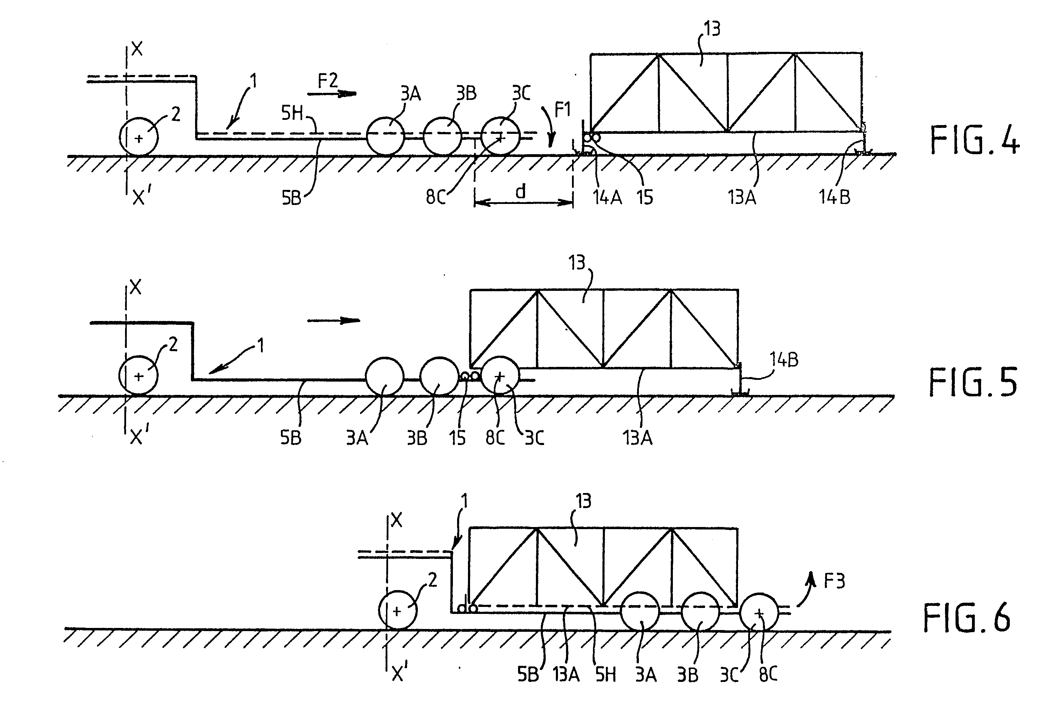

On va maintenant décrire les différentes phases du chargement de la semi-remorque en se référant aux figures 4 à 8.

Sur la figure 4, on a représenté très schématiquement le chevalet 13 en place sur le sol sur ses quatre pieds escamotables 14A à l'avant et 14B à l'arrière. La semi-remorque 1 a été également représentée de façon très schématique à proximité et dans le prolongement du chevalet 13.

On procède alors aux différentes phases exposées ci-après :

1°) on fixe sous les cornières 13A, à l'avant du chevalet 13, des patins à roulement 15 sur lesquels sont fixés des galets de guidage latéraux 15A, comme cela a été représenté en détail sur la figure 7 ;

on place des piges de guidage (non représentées) sur le chevalet pour permettre au conducteur d'assurer l'alignement de la semi-remorque 1 avec le chevalet 13 ;

2°) on dégonfle la suspension au moyen de la valve manuelle de réglage, ce qui a pour effet d'assurer la descente du plateau 5 qui passe de sa position haute 5H à sa position basse 5B par pivotement dans le sens de la flèche F1 ;

la partie arrière du plateau peut alors s'engager sous le chevalet 13 ;

3°) on fait reculer la semi-remorque dans le sens de la flèche F2 en se guidant sur les piges placées sur le chevalet 13 et de façon que l'ouverture 7 pratiquée à l'arrière du plateau (voir figure 2) englobe la partie avant du chevalet . Lorsque la semi-remorque a reculé d'une distance d déterminée en fonction de la profondeur 7B de l'ouverture 7 les pieds avant 14A du chevalet 13 se trouvent décollés du sol du fait que les galets de roulement 15A du patin 15 viennent alors porter sur les pistes de roulement latérales 6 du plateau 5B de la semi-remorque (voir figures 2 et 7). Un contact électrique d'un type quelconque connu permet d'assurer l'arrêt de la semi-remorque 1 avant que les pieds avant 14A du chevalet ne touchent le plateau ;

4°) on dégage les pieds avant 14A du chevalet 13 ;

5°) on se trouve, à ce moment, dans la position de la figure 5 et on fait reculer la semi-remorque 1 dans le sens de la flèche F2, le plateau 5B s'engageant peu à peu sous le chevalet 13 dont la partie avant roule grâce aux galets 15A sur les pistes de roulement 6 du plateau 5 jusqu'à ce que la partie avant du chevalet atteigne la partie extrème du plateau ;

6°) on regonfle la suspension pneumatique en position de route dans le sens de la flèche F3 de la figure 6. Ceci permet alors de dégager les pieds arrière 14B du chevalet 13 lequel vient au contact du plateau ;

7°) comme cela apparaît distinctement sur les figures 2 et 8 et suivant une caractéristique de l'invention, les galets 15A des patins de roulement se trouvent en cette position au-dessus de deux plaques escamotables 16 et commandées par des vérins hydrauliques schématisés en 17 sur la figure 8. Ces vérins sont actionnés et les plaques s'escamotent d'où résulte que l'ensemble du chevalet 13 se trouve posé sur le plateau 5 de la semi-remorque 1, laquelle peut donc assurer le transport du chevalet en toute sécurité.

Pour le déchargement du chevalet de la semi-remorque au lieu de destination, on procède aux opérations inverses de celles que l'on vient de décrire pour le chargement.

Il va de soi que la présente invention a été décrite et représentée à titre d'exemple préférentiel et que l'on pourra apporter des équivalences techniques dans ses éléments constitutifs sans pour autant sortir du cadre de ladite invention telle que définie dans les revendications annexées.

REVENDICATIONS

1. Semi-remorque pour le transport de chevalets porte-verre ou similaires, à chargement et déchargement autonomes, caractérisée en ce qu'elle comporte en combinaison :

- un châssis (1) supporté, à sa partie avant, par un véhicule tracteur (2) d'un type quelconque connu et, à sa partie arrière, par une suspension pneumatique latérale (4A, 4B, 4C) disposée à la partie supérieure du train de roues arrières (3A, 3B, 3C) ;

- ladite suspension pneumatique permettant le débattement vertical du plateau (5), entre une position haute de transport (5H) et une position basse de chargement, ou de déchargement (5B), pour laquelle la partie arrière dudit plateau peut s'engager en-dessous du chevalet (13) posé au sol sur quatre pieds d'extrémités escamotables (14A, 14B) ; et muni à son extrémité avant de patins à galets de roulement (15, 15A) ;

- ledit plateau (5) étant pourvu, d'une part, à son extrémité arrière d'une ouverture (7) à entrée biaise latéralement (7B) et d'une profondeur (7A) s'étendant jusqu'en avant de l'axe géométrique (YC-YC') du train de roues arrières (3C), d'autre part, de pistes de roulement longitudinales (6) destinées à recevoir les patins à galets de roulement (15, 15A) du chevalet (13), en avant du train de roues arrières (3C) de la semi-remorque et à leur servir de support, au fur et à mesure du recul de la semi-remorque, à position basse (5B) du plateau sous le chevalet (13) jusqu'à ce que l'extrémité avant de ce dernier atteigne l'avant du plateau de la semi-remorque ;

- un système de réglage de la suspension pneumatique permettant d'assurer à volonté la descente du plateau (5) en position de chargement (5B) et la remontée de ce plateau en position de transport (5H).

2. Semi-remorque suivant la revendication 1, caractérisée en ce que les roues (3A, 3B, 3C) du train arrière sont montées sur des moignons d'essieux (8A, 8B, 8C) fixés sur des tôles épaisses de forme générale triangulaire (9A, 9B, 9C) formant balanciers qui s'articulent sur des corps d'essieux (10A, 10B, 10C) passant au travers du plateau (5) et s'appuient à leur extrémité supérieure (11A, 11B, 11C) sur des soufflets pneumatiques (4A, 4B, 4C) prenant appui, eux-mêmes, sur des éléments (12B) du châssis (1), grâce à quoi le débattement vertical du plateau s'effectue sans que rien ne dépasse sous le châssis, au moment du chargement et sur route.

3. Semi-remorque suivant la revendication 2, caractérisée en ce que la semi-remorque (1) comporte trois trains de roues arrière (3A, 3B, 3C) dont la cinématique des balanciers respectifs (9A, 9B, 9C) est déterminée pour que le plateau (5) puisse s'incliner vers l'arrière en position de chargement (5B).

4. Semi-remorque suivant l'une quelconque des revendications 1 à 3, caractérisée en ce que les pistes de roulement (6) du plateau (5) sont munies à leur extrémité avant de plaques escamotables (16) commandées par des vérins (17), ces plaques recevant les patins de roulement (15, 15A) du chevalet (13) lorsque ce dernier est en position de chargement définitive et étant alors escamotées pour que l'ensemble du chevalet (13) soit posé sur le plateau (5) de la semi-remorque.

5. Procédé de mise en oeuvre d'une semi-remorque pour le transport de chevalets porte-verre ou similaires, à chargement et déchargement autonomes, telle que définie aux revendications 1 à 4, caractérisé en ce qu'il consiste :

- pour le chargement, à disposer la semi-remorque (1) dans le prolongement du chevalet (13) posé au sol sur ses pieds escamotables (14A, 14B) et muni de patins de roulement (15, 15A) à son extrémité avant ; à dégonfler la suspension pneumatique (4A, 4B, 4C) ; à reculer la semi-remorque jusqu'à ce que les patins de roulement (15, 15A) du chevalet (13) viennent au contact des pistes de roulement (6) du plateau (5) et que les pieds avant (14A) du chevalet décollent du sol ; à dégager lesdits pieds avant ; à reculer la semi-remorque jusqu'à ce

10

que les patins de roulement (15, 15A) viennent au-dessus des plaques escamotables (16) du plateau ; à regonfler la suspension pneumatique (4A, 4B, 4C) en position route ; à dégager les pieds arrière (14B) du chevalet (13) puis à escamoter les plaques (16) supportant les patins de roulement (15, 15A) du chevalet (13) ;

      – et pour le déchargement, à procéder aux opérations inverses de celles du chargement.

FIG.1

FIG.2

FIG.3

FIG.4

FIG.5

FIG.6

FIG.7

FIG.8

5/5

0070944

Office européen
des brevets

**RAPPORT DE RECHERCHE EUROPEENNE**

EP 81 40 1353

| Catégorie | Citation du document avec indication, en cas de besoin, des parties pertinentes | Revendication concernée |
|---|---|---|
| X | <u>FR - A - 2 458 423</u> (ACTM; ETS ANDRE) | 1,5 |
| Y | * En entier * | 2,3 |
| | -- | |
| Y | <u>FR - A - 2 156 572</u> (K. KASSBOHRER FAHRZEUG WERKE) | |
| | * En entier * | 2,3 |
| | -- | |
| Y | <u>US - A - 3 071 267</u> (H.J. BUNCH) | |
| | * Colonne 1, ligne 39 - colonne 2, ligne 2 * | 3 |
| | -- | |
| A | <u>FR - A - 1 554 163</u> (M. NORDBY) | 1,5 |
| | * En entier * | |
| | -- | |
| A | <u>GB - A - 1 401 807</u> (PENGCO TRANSPORT SYSTEMS) | |
| | * En entier * | 1,4,5 |
| | -- | |
| A | <u>FR - A - 967 010</u> (P.J. RETEL) | |
| | * En entier * | 1,5 |
| | -- | |
| A | <u>FR - A - 2 123 933</u> (CARROZZERIA PASINO) | |
| | * Page 4, ligne 29 - page 6, ligne 18 * | 5 |
| | -- | |
| A | <u>US - A - 4 101 144</u> (D. ROSS et al.) | |
| | * Résumé * -- ./. | 1 |

**DOCUMENTS CONSIDERES COMME PERTINENTS**

**CLASSEMENT DE LA DEMANDE (Int. Cl. 3)**

B 60 P 3/00
B 60 G 5/00
B 60 P 1/64

**DOMAINES TECHNIQUES RECHERCHES (Int. Cl. 3)**

B 60 G
B 60 P

**CATEGORIE DES DOCUMENTS CITES**

X: particulièrement pertinent à lui seul
Y: particulièrement pertinent en combinaison avec un autre document de la même catégorie
A: arrière-plan technologique·
O: divulgation non-écrite
P: document intercalaire
T: théorie ou principe à la base de l'invention
E: document de brevet antérieur, mais publié à la date de dépôt ou après cette date
D: cité dans la demande
L: cité pour d'autres raisons

&: membre de la même famille, document correspondant

X Le présent rapport de recherche a été établi pour toutes les revendications

| Lieu de la recherche | Date d'achèvement de la recherche | Examinateur |
|---|---|---|
| La Haye | 21-04-1982 | CINQUANTINI |

OEB Form 1503.1  06.78

| Catégorie | Citation du document avec indication, en cas de besoin, des parties pertinentes | Revendica-tion concernée |
|---|---|---|
| A | FR - A - 2 150 398 (FREDLSPERGER et KOGEL) <br> * Pages 5,6 * | 1,2,3 |
| A | DE - A - 1 912 830 (HANOMAG-HEN-SCHEL) | |
| A | US - A - 3 103 368 (C.W. ERICKSON) | |
| A | FR - A - 2 026 539 (FIRMA ACKER-MANN FAHRZEUGBAU) | |

**DOCUMENTS CONSIDERES COMME PERTINENTS**

CLASSEMENT DE LA DEMANDE (Int. Cl.³)

DOMAINES TECHNIQUES RECHERCHES (Int. Cl.³)